# EUROPEAN PATENT APPLICATION

(11) **EP 1 263 211 A2**
(43) Date of publication of application: **04.12.2002**
(21) Application number: 02252968.9
(22) Date of filing: 26.04.2002
(51) Int. Cl.: H04N 5/00

(54) **Preselection apparatus for preselecting a broadcast program, preselection method, preselection program, recorder, and recording medium**

(30) Priority: 01.06.2001 JP 2001166718
(71) Applicant: Pioneer Corporation, Meguro-ku, Tokyo (JP)
(72) Inventor: Okajima, Takahiro, Tokorozawa-shi, Saitama (JP); Bessho, Manabu, Tokorozawa-shi, Saitama (JP); Komatsu, Kazuyoshi, Tokorozawa-shi, Saitama (JP); Tsunoi, Tomoaki, Tokorozawa-shi, Saitama (JP); Sakamoto, Shinichiro, Tokorozawa-shi, Saitama (JP); Hashimoto, Hiroaki, Tokorozawa-shi, Saitama (JP)
(74) Representative: Haley, Stephen

(57) **Abstract**

Distribution schedule time data contained in electronicprogram guide data distributed from a broadcast station (an information providing source) is stored in a preselection data storage area as preselection data, whereby preselection of content of any desired broadcast program is registered. After preselection of the content is registered, if electronic program guide data provides change of the distribution schedule time data of the preselected content, the preselection data is updated based on the data of the changed distribution schedule time, the preselection management is performed based on the updated preselection data, and the preselected content is recorded in a record area.

## Description

This invention relates to a preselection apparatus, a preselection method, and a preselection program for preselecting content to be distributed through a broadcast network or a communication network, for example . This invention also relates to a recorder comprising a preselection function of automatically recording the preselected content, and a recording medium for recording the program.

A video cassette recorder (VCR) is known as a recorder for enabling the user, etc., to preselect content of a broadcast program, etc., distributed by a television broadcast for recording.

In a general preselection function of a video cassette recorder in a related art, when the user, etc., specifies (presets) the broadcast start and end times and the broadcast station channel of any desired broadcast program, the specified preselection contents are stored and time management is started. When the preselected broadcast start time comes, the preselected broadcast station channel is automatically set and recording is started. When the broadcast end time comes, the recording operation is terminated.

Preselection functions called "daily recording" and "weekly recording" are provided and using these preselection functions, recording can be accomplished periodically every predetermined period such as every day or every week.

That is, if the user, etc., wants to regularly record a program broadcasted at a predetermined time every day (for example, news program, etc.,), as he or she specifies the broadcast start and end times and the broadcast station channel of the program and further operates a predetermined operation button for specifying "daily recording", the video cassette recorder repeats recording every day between the preselected broadcast start and end times. If the user, etc., wants to regularly record a program broadcasted at a predetermined time every week (for example, serialized TV drama, etc.,), as he or she specifies the broadcast day of the week, the broadcast start and end times, and the broadcast station channel of the program and further operates a predetermined operation button for specifying "weekly recording", the video cassette recorder repeats recording every week between the preselected broadcast start and end times on the same preselected day of the week.

Thus, the video cassette recorder in the related art comprises the preselection functions such as "daily recording" and "weekly recording," so that if the user, etc., does not preselect all of the broadcast start and end times of the broadcast program, the program desired by the user, etc., can be recorded regularly for improving the convenience of the user, etc.

However, the video cassette recorder in the related art is simply programmed to record each broadcast program based on the time information of the broadcast start and end times specified by the user, etc.

Thus, if schedule change such that the distribution time of the preselected broadcast program is changed one day for any reason or the distribution of the preselected broadcast program is dropped, the preselected broadcast program is recorded with a part lost or another program not preselected is recorded; this is a problem.

With such problems in view, it is therefore an object of the invention to provide a preselection apparatus, a preselection method, and a preselection program for appropriately preselecting content distributed through a broadcast network or a communication network, for example, and a recorder comprising a preselection function for appropriately recording preselected content.

To the end, according to the invention, there is provided a preselection apparatus for receiving schedule information containing time information indicating the distribution schedule time of content from an information providing source for providing the schedule information and preselecting the content, the preselection apparatus comprising reception means for receiving the schedule information provided from the information providing source, storage means for storing the information indicating the distribution schedule time of content, received at the reception means, thereby registering preselection of the content, anda control section for performing preselection management with the distribution schedule time information stored in the storage means as preselection information and when the reception means receives schedule information meaning that the distribution schedule time is changed, the control section for updating the preselection information stored in the storage means based on the received information meaning that the distribution schedule time is changed and performing the preselection management based on the updated preselection information.

According to the preselection apparatus of the invention, the time information thus configured indicating the distribution schedule time, contained in the schedule information provided from the information providing source is stored in the storage means as preselection information, whereby preselection of the content is registered. After preselection of the content is registered, if schedule information provides change of the information indicating the distribution schedule time of the preselected content, the preselection information in the storage means is updated based on the schedule information meaning that the distribution schedule time is changed, and the preselection management is performed based on the updated preselection information. Accordingly, if the distribution schedule time of the preselected content is changed, preselection management of the content is performed appropriately.

To the end, according to the invention, there is provided a preselection method for receiving schedule information containing time information indicating the distribution schedule time of content from an information providing source for providing the schedule information and preselecting the content, the preselection method comprising the steps of acquiring the schedule information provided from the information providing source, storing the information indicating the distribution schedule time of content, contained in the acquired schedule information, thereby registering preselection of the content, and performing preselection management with the distribution schedule time information as preselection information and when schedule information meaning that the distribution schedule time is changed is provided from the information providing source, updating the preselection information under the preselection management based on the provided information meaning that the distribution schedule time is changed and performing the preselection management based on the updated preselection information.

According to the preselection method of the invention, when the schedule information is acquired from the information providing source, the time information indicating the distribution schedule time of the content is stored, whereby preselection of the content is registered, and preselection management is performed with the distribution schedule time information as preselection information. When schedule information meaning that the distribution schedule time is changed is provided from the information providing source, the preselection information under the preselection management is updated based on the provided information meaning that the distribution schedule time is changed and the preselection management is performed based on the updated preselection information.

To the end, according to the invention, there is provided a preselection program for receiving schedule information containing the information indicating the distribution schedule time of content from an information providing source for providing the schedule information and preselecting the content, the preselection program comprising reception means for acquiring the schedule information provided from the information providing source, preselection registration means for storing the information indicating the distribution schedule time of content, contained in the acquired schedule information, thereby registering preselection of the content, and preselection management means for performing preselection management with the distribution schedule time information as preselection information and when schedule information meaning that the distribution schedule time is changed is provided from the information providing source, updating the preselection information under the preselection management based on the provided information meaning that the distribution schedule time is changed and performing the preselection management based on the updated preselection information.

According to the preselection program of the invention, when the schedule information is acquired from the information providing source, the information indicating the distribution schedule time of the content is stored, whereby preselection of the content is registered, and preselection management is performed with the distribution schedule time information as preselection information. When schedule information meaning that the distribution schedule time is changed is provided from the information providing source, the preselection information under the preselection management is updated based on the provided information meaning that the distribution schedule time is changed and the preselection management is performed based on the updated preselection information. The preselection program is downloaded into or installed in a microcomputer, whereby it is made possible to preselect content in an electronic machine comprising the microcomputer.

To the end, according to the invention, there is provided a recorder comprising a preselection function for receiving schedule information containing time information indicating the distribution schedule time of content from an information providing source for providing the schedule information, preselecting the content, and recording the preselected content, the recorder comprising record means for recording the content, reception means for receiving the schedule information provided from the information providing source, storagemeans for storing the information indicating the distribution schedule time of content, received at the reception means, thereby registering preselection of the content, and control means for performing preselection management with the distribution schedule time information stored in the storage means as preselection information and when the reception means receives schedule information meaning that the distribution schedule time is changed, the control section for updating the preselection information stored in the storage means based on the received information meaning that the distribution schedule time is changed, performing the preselection management based on the updated preselection information, and recording the content in the record means.

According to the described recorder comprising the preselection function of the invention, the information indicating the distribution schedule time, contained in the schedule information provided from the information providing source is stored in the storage means as preselection information, whereby preselection of the content is registered. After preselection of the content is registered, if schedule information provides change of the information indicating the distribution schedule time of the preselected content, the preselection information in the storage means is updated based on the schedule information meaning that the distribution schedule time is changed, the preselection management is performed based on the updated preselection information, and the preselected content is recorded in the record means. Accordingly, if the distribution schedule time of the preselected content is changed, preselection management of the content is performed appropriately and the content is recorded in the record means.

In the preselection apparatus, the preselection method, the preselection program, and the recorder comprising the preselection function, the preselection information is information of an electronic program guide distributed through a broadcast network or a communication network.

According to the preselection apparatus, the preselection method, and the recorder comprising the preselection function, preselection of content distributed through the broadcast network or the communication network is registered based on the distribution schedule time information contained in the information of an electronic program guide and preselection management is performed. If changed schedule information is distributed during the preselection management after the preselection is registered, the already registered preselection information is updated based on the distributed schedule information and the preselection management is performed based on the updated preselection information. Accordingly, if the distribution schedule time, etc., of the preselected content is changed, preselection management of the content is performed appropriately and in the recorder comprising the preselection function, the content is recorded appropriately in the record means.

Another aspect of this invention is a recorder comprising a preselection function, the preselection function comprising a reception function for acquiring schedule information provided from an information providing source, the schedule information for containing time information indicating a distribution schedule time of content, a preselection registration function for storing the time information contained in the acquired schedule information, thereby registering preselection of the content, and a preselection management function for performing preselection management with the distribution schedule time information as preselection information, wherein, when schedule information indicating a change of the distribution schedule time is provided from the information providing source, the preselection information is updated by the preselection management function under the preselection management based on the provided information indicating the changed distribution schedule time and the preselection management is performed by the preselection management function based on the updated preselection information.

According to another aspect of the invention, the preselection function is acquired by a download through a communication network or an installation from a storage medium.

Another aspect of the invention is a recording medium for recording a program comprising reception means for acquiring schedule information provided from an information providing source, the schedule information containing time information indicating a distribution schedule time of content, preselection registration means for storing the information indicating the distribution schedule time of content, contained in the acquired schedule information, thereby registering preselection of the content, and preselection management means for performing preselection management with the distribution schedule time information as preselection information wherein, when schedule information indicating a change of the distribution schedule time is provided from the information providing source, the preselection management means updates the preselection information under the preselection management based on the provided information indicateing the changed distribution schedule time and performs the preselection management based on the updated preselection information.

In the Drawings:
FIG. 1 is a block diagram to show the configuration of a recorder of an embodiment of the invention;
FIG. 2 is a flowchart to describe the operation of the recorder of an embodiment of the invention;
FIG. 3 is a drawing to show the data structure of electronic program guide data;
FIG. 4A is a drawing to show the data structure of preselection data;
FIG. 4B is another drawing to show the data structure of preselection data;
FIG. 4C is another drawing to show the data structure of preselection data;
FIG. 5 is a drawing to show the display format of an electronic program guide; and
FIG. 6 is a drawing to show the detailed display format of a title.

Referring now to the accompanying drawings, there is shown a preferred embodiment of the invention. A recorder comprising functions of receiving airwaves distributed through a broadcast network from one broadcast station of an information providing source, recording and playing back content (program) provided by receiving the airwaves, and enabling the user, etc., to preselect content will be discussed as an embodiment of the invention. A recorder for handling digital multichannel television airwaves as airwaves will be discussed.

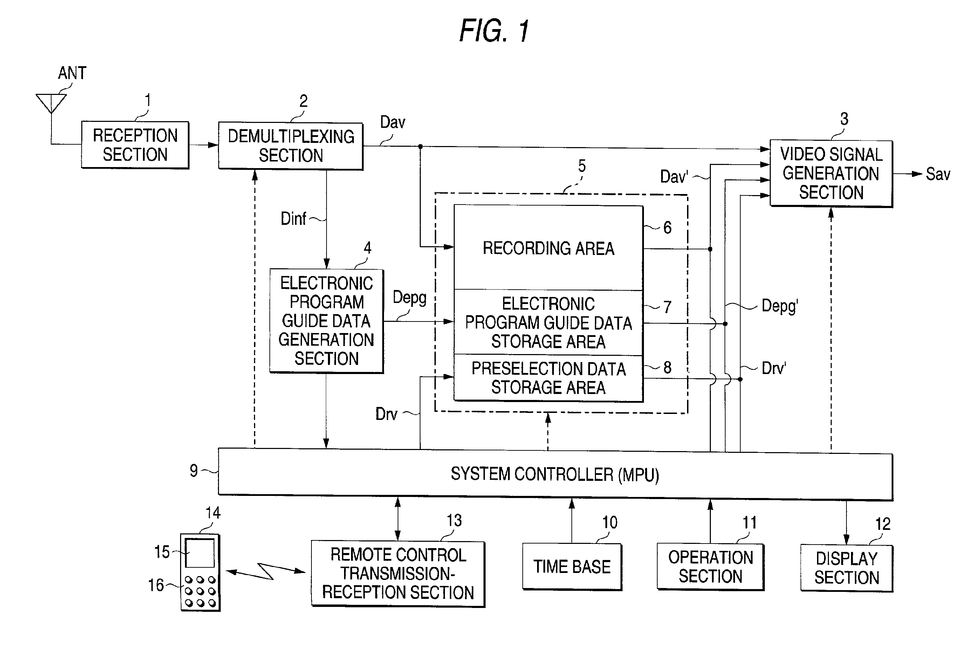

FIG. 1 is a block diagram to show the configuration of the recorder. In the figure, the recorder receives airwaves distributed from a broadcast station and coming from a ground station or a satellite at an antenna ANT and RF-demodulates a high-frequency signal provided by receiving the airwaves by a reception section 1, thereby generating digital multichannel television data that can undergo signal processing.

The digital multichannel television data is supplied to a demultiplexing section 2, which then separates the digital multichannel television data into video data and audio data, which will be hereinafter referred to as video audio data Dav, and electronic program guide data of supplementary information, which will be hereinafter referred to as electronic program guide data Dinf. When the broadcast station channel is specified from a system controller 9 (described later), the demultiplexing section 2 extracts and outputs the video audio data Dav of the specified channel.

The electronic program guide data is electronic program guide (EPG) data compliant with the digital multichannel television broadcast standard and distributed supplementary to the video audio data; it is standardized for providing the user, etc. with schedule information of broadcast programs scheduled to be distributed, such as the titles, the broadcast schedule dates, the broadcast start and end times, the broadcast stations, and the categories of the programs, and details for introducing the contents of the programs, and is distributed along with these information as supplementary information.

Avideo signal generation section 3, an electronicprogram guide data generation section 4, and a record section 5 are connected to the demultiplexing section 2.

The video signal generation section 3 converts the video audio data Dav supplied from the demultiplexing section 2 into a signal Sav for video playback and audio playback, such as a composite signal and a digital video signal, and outputs and supplies the signal Sav to a display and a loudspeaker (not shown) for performing video playback and audio playback.

When video audio data Dav', electronic program guide data Depg', and preselection data Drv' recorded in the record section 5 (described later) are supplied to the video signal generation section 3, the video signal generation section 3 converts the video audio data Dav', the electronic program guide data Depg', and the preselection data Drv' into a signal Sav of a composite signal, a digital video signal, etc., and outputs the signal as it converts the video audio data Dav supplied from the demultiplexing section 2 into the signal Sav and outputs the signal.

As instructed by the system controller 9, the video signal generation section 3 can input the video audio data Dav, the video audio data Dav', the electronic program guide data Depg', and the preselection data Drv' and can convert the data Dav, Dav', Depg', and Drv' separtely into a signal Sav of a composite signal, a digital video signal, etc., thereby displaying two or more pictures on a display screen and can combine some of the data Dav, Dav', Depg', and Drv' and convert the resultant data into the signal Sav, thereby making it possible to display two or more pictures on a display screen. Displaying two or more pictures on one display screen is called "multidisplay."

The electronic program guide data generation section 4 converts the electronic program guide data Dinf supplied from the demultiplexing section 2 into OSD (on screen display) display data and records the provided data in the record section 5 as electronic program guide data Depg. Whenever the electronic program guide data Dinf is supplied from the demultiplexing section 2, the electronic program guide data generation section 4 supplies a report signal indicating that the data is supplied to the system controller 9.

The record section 5 is implemented as a hard disk drive or a DVD drive comprising a hard disk, a DVD (Digital Versatile Disc), or the like onto which data can be rewritten as a storage medium and a recording area 6, an electronic program guide data storage area 7, and a preselection data storage area 8 are allocated to the storage medium.

If a "recording" instruction is given by the system controller 9 to the record section 5, the video audio data Dav supplied from the demultiplexing section 2 is recorded in the recording area 6; if an "electronic program guide data record" instruction is given, the electronic program guide data Depg supplied from the electronic program guide data generation section 4 is stored in the electronic program guide data storage area 7; and if an instruction for "registering" the preselection data Drv supplied from the system controller 9 is given, the preselection data Drv is stored in the preselection data storage area 8.

If instructions for reading the video audio data Dav', the electronic program guide data Depg', and the preselection data Drv' already recorded (stored) in the recording area 6, the electronic program guide data storage area 7, and the preselection data storage area 8 are given by the system controller 9, the video audio data Dav', the electronic program guide data Depg', and the preselection data Drv' are read and output. The readout video audio data Dav', electronic program guide data Depg', and preselection data Drv' are supplied to the video signal generation section 3 or the system controller 9 as instructed by the system controller 9.

The system controller 9 comprises a microprocessor (MPU) for executing a preset system program and controls the record section 5, etc., previously described by the microprocessor and also controls the whole operation of the recorder in a centralized manner.

Connected to the system controller 9 are a time base 10 for performing time counting, an operation section 11 comprising a plurality of operation keys for the user, etc., to select any desired function, a display section 12 implemented as a liquid crystal display, etc., for showing visual information for the user, etc., and a remote control transmission-reception section 13 for conducting radio communications with a remote controller 14.

Although described in detail later, if the user, etc., preselects any desired program by operating a predetermined operation key of the operation section 11, the system controller 9 generates preselection data Drv using the electronic program guide data Depg' read from the electronic program guide data storage area 7 and stores the preselection data Drv in the preselection data storage area 8 to register so-called preselection of recording.
The broadcast start and end times of the preselected program are determined based on the time count result of the time base 10 and the video audio data Dav of the preselected program is recorded in the record section 5 between the broadcast start and end times.

Whenever the most recent electronic program guide data Dinf is supplied from a broadcast station to the electronic program guide data generation section 4 and the most recent electronic program guide data Depg for OSD is generated, the system controller 9 updates the current electronicprogram guide data to the most recent electronic program guide data Depg in the electronic program guide data storage area 7 for storage. That is, current electronic program guide data is updated to the most recent electronic program guide data Depg. The system controller 9 compares the most recent electronic program guide data Depg' with the preselection data Drv' in the preselection data storage area 8. If the preselection contents of the broadcast program specified by the preselection data Drv' differ from the contents of the distribution schedule of the broadcast program specified by the most recent electronic program guide data Depg', the system controller 9 determines that the schedule of the broadcast program is changed, and changes (corrects) the preselection data Drv' based on the contents of the distribution schedule of the broadcast program specified by the most recent electronic program guide data Depg' to generate new preselection data Drv and stores the generated new preselection data Drv in place of the old preselection data in the preselection data storage area 8 for updating. As the preselection data Drv' is thus corrected and updated based on the most recent electronic program guide data Depg', if the schedule of the program preselected by the user, etc., is changed, the system controller 9 enables the recorder to record the program appropriately in response to the schedule change.

The remote controller 14 comprises a transmission-reception section (not shown) for conducting radio communications with the remote control transmission-reception section 13, an operation section 16 similar to the operation section 11 previously described, and a display section 15 similar to the display section 12 previously described.

If the user, etc., operates the operation section 16, the user, etc., can give the same instruction as he or she operates the operation section 11 to the system controller 9 through the remote control transmission-reception section 13, and the same information as the display contents displayedon the display section 12 is sent from the system controller 9 through the remote control transmission-reception section 13 to the display section 15, so that the same display contents as the display section 12 are also displayed on the display section 15.

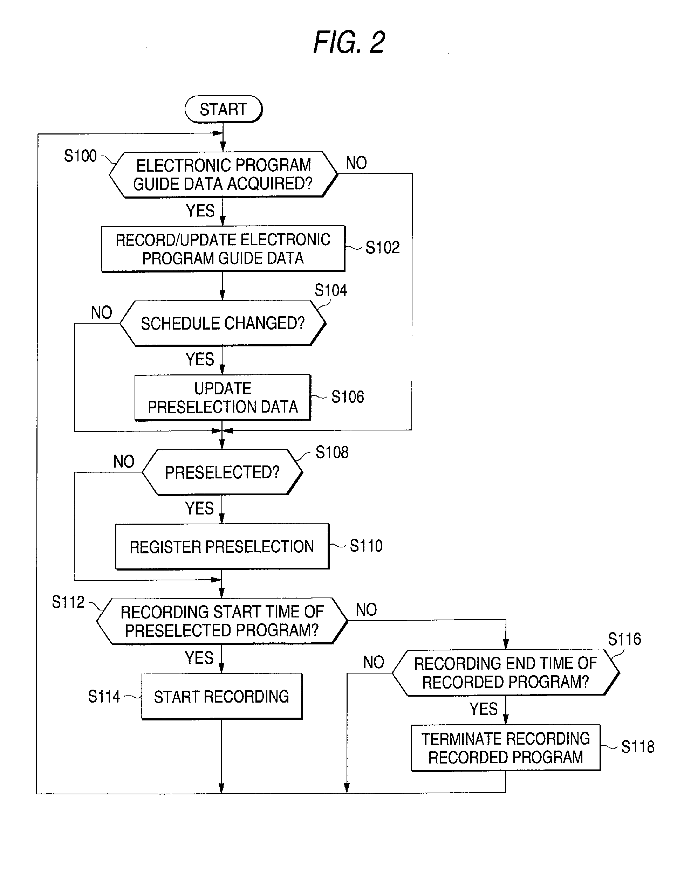

Next, the operation of the recorder thus configured will be discussed with reference to a flowchart of FIG. 2. Since the remote controller 14 is provided with the similar functions to those of the operation section 11 and the display section 12 as described above, the operation of the recorder when the user, etc., operates the remote controller 14 to give any desired instruction to the system controller 9 will be discussed.

When the recorder is started in response to an instruction from the user, etc., at step S100, the system controller 9 determines whether or not electronic program guide data is acquired based on the report signal described above. If no electronic program guide data is acquired, the system controller 9 goes to step S108 described later. If electronic program guide data is acquired, the system controller 9 goes to step S102 and stores electronic program guide data Depg for OSD generated in the electronic program guide data generation section 4 in the electronic program guide data storage area 7.

If electronic program guide data is acquired at the second time or later, the system controller 9 updates the current electronic program guide data to the most recent electronic program guide data in the electronic program guide data storage area 7.

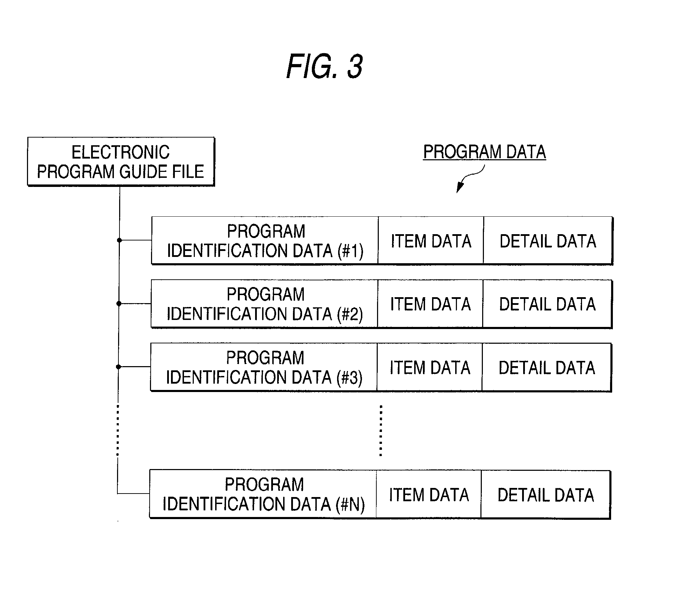

Here, as shown in FIG. 3, the electronic program guide data Depg' is managed as an electronic program guide file compliant with a predetermined file management algorithm. That is, item data and detail data contained in the electronic program guide data Depg' are classified by program and program identification data is assigned to the classified item data and detail data, whereby program data for making possible identification for each program is generated.

The item data is data concerning the titles of the programs scheduled to be broadcasted, the broadcast schedule dates, the broadcast start and end times, the broadcast stations, and the categories of the programs, and the detail data is data concerning details for introducing the contents of the programs . Therefore, the item data and the detail data are classified and program identification data is assigned, whereby program data for making it possible to identify each program scheduled to be broadcasted is generated and is stored in the electronic program guide data storage area 7 as an electronic program guide file collecting the program data.

Next, at step S104, if preselection data is already stored in the preselection data storage area 8, the system controller 9 reads the preselection data Drv', checks the most recent electronic program guide data Depg' corresponding to the preselection contents of the program specified by the preselection data Drv', and determines whether or not the schedule of the program scheduled to be broadcasted is changed.

That is, the system controller 9 retrieves the program data corresponding to the program preselected by the preselection data Drv' from the electronic program guide file shown in FIG. 3 and compares the item data contained in the retrieved program data with the preselection data Drv'.

If the broadcast schedule date and the broadcast start and end times in the item data differ from the recording preselection date and the recording start and end times in the preselection data Drv', the system controller 9 determines that the schedule of the preselected program is changed by the broadcast station, and goes to step S106.

If the broadcast schedule date and the broadcast start and end times in the item data are the same as the recording preselection date and the recording start and end times in the preselection data Drv', the system controller 9 determines that the schedule of the preselected program is not changed, and goes to step S108.

At step S106, the system controller 9 extracts the data of the broadcast schedule date and the broadcast start and end times from the item data in the program data retrieved at step S104 and replaces the data of the recording preselection date and the recording start and end times in the preselection data Drv' with the data of the broadcast schedule date and the broadcast start and end times.

Accordingly, while maintaining the preselected program, the system controller 9 generates new preselection data Drv having the data of the recording preselection date and the recording start and end times matching the actual schedule of the program and stores the new preselection data Drv in the preselection data storage area 8 for updating.

If distribution of the preselected program is canceled, the most recent electronic program guide data Dinf from which the data concerning the canceled program is excluded is distributed from the broadcast station and thus the most recent electronic program guide data Depg' stored in the electronic program guide data storage area 7 does not contain the data concerning the canceled program either.

Then, if the system controller 9 does not find the program data corresponding to the preselected program as a result of retrieving the electronic program guide file shown in FIG. 3 based on the preselection data Drv' at step S104, the system controller 9 goes to step S106 and displays a message to the effect that the preselection data Drv' is erased on the display section 15. If the user, etc., enters an instruction for giving permission for erasing the preselection data Drv', the system controller 9 erases the preselection data Drv' and excludes the program from the programs intended for recording preselection operation.

Next, at step S108, the system controller 9 checks whether or not the user, etc., performs recording preselection operation. If the user, etc., performs recording preselection operation, the system controller 9 goes to step S110; if the user, etc., does not perform recording preselection operation, the system controller 9 goes to step S112.

At step S110, the system controller 9 generates preselection data Drv to identify the program specified by the user, etc., and stores the preselection data Drv in the preselection data storage area 8.

That is, processing of new recording preselection is performed at step S110 and processing of updating the preselection data Drv, etc., described at steps S104 and 106 is performed by repetitive processing starting at step S100 described later.

Here, if the user, etc., operates a predetermined operation key of the operation section 16 to give a recording preselection start instruct, the system controller 9 supplies the electronic program guide data Depg' already stored in the electronic program guide data storage area 7 to the video signal generation section 3, thereby displaying the electronic program guide contents on a display (not shown) . The system controller 9 also transmits the electronic program guide data Depg' through the remote control transmission-reception section 13 to the remote controller 14 for displaying the electronic program guide contents on the display section 15.

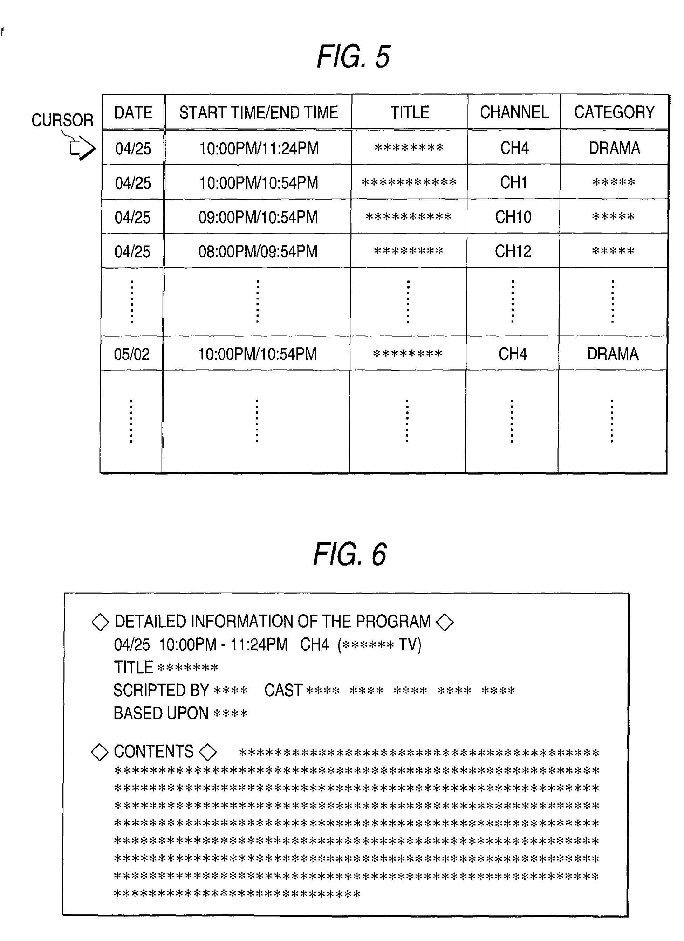

FIG. 5 shows a display example of the electronic program guide displayed on the display section 15; it lists the item data of the program data shown in FIG. 3.

Further, as the user, etc., operates a predetermined operation key called "cursor move key" of the operation section 16, a cursor displayed together with the electronic program guide is moved. Further, if the user, etc., operates a predetermined operation key called "detail display key" at the display position of any desired program, details for introducing the contents of the program pointed to by the cursor are displayed as illustrated in FIG. 6.

If the user, etc., specifies any desired program by operating the "cursor move key" and operates a predetermined operation key called "recording preselection key," the system controller 9 acquires the program data of the program pointed to by the cursor from the electronic program guide file shown in FIG. 3. It generates preselection data Drv from the acquired program data and further assigns preselection registration identification data for identifying the program whose recording is preselected to the preselection data Drv for storage in the preselection data storage area 8.

If the user, etc., specifies any desired program by operating the "cursormove key" and further operates an operation key called "every-time recording key" and then operates the "recording preselection key" of the operation section 16, the system controller 9 includes the every-time broadcast schedule date in the preselection data Drv for storage in the preselection data storage area 8. Accordingly, it is made possible to preselect recording to record a news program scheduled to be distributed at a predetermined time every day, a serialized drama scheduled to be distributed at a predetermined time every week, and the like regularly every time.

However, if the user, etc., specifies a program by operating the "every-time recording key," the system controller 9 checks the program data shown in FIG. 3 and determines whether the specified program is a non-serialized program or a periodically distributed program such as the news program or the serialized drama mentioned above. If the specifiedprogram is a non-serialized program, the system controller 9 displays a warning to the effect that there is a discrepancy in the user' s operation on the display section 15; if the specified program is a periodically distributed program such as the news program or the serialized drama mentioned above, the system controller 9 includes the every-time broadcast schedule date in the preselection data Drv for storage in the preselection data storage area 8.

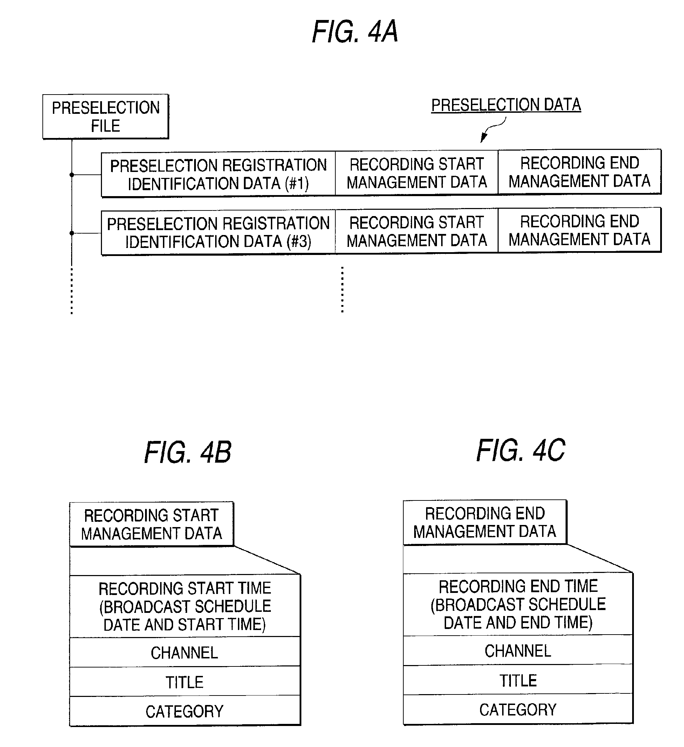

As shown in FIG. 4A, one or more pieces of preselection data Drv for preselection of recording is managed as a preselection file compliant with the predetermined file management algorithm and each piece of preselection data Drv is made up of the preselection registration identification data described above, recording start management data, and recording end management data.

As shown in FIG. 4 B, the recording start management data of the preselection data Drv is made up of the title of the program scheduled to be broadcasted, the recording start time consisting of the broadcast schedule date and broadcast start time of the program, the channel of the broadcast station, and the category of the program, contained in the item data of the program data. As shown in FIG. 4 C, the recording end management data of the preselection data Drv is made up of the title of the program scheduled to be broadcasted, the recording end time consisting of the broadcast schedule date and broadcast end time of the program, the channel of the broadcast station, and the category of the program, contained in the item data of the program data.

Thepreselection registration identification data of each piece of the preselection data Drv shown in FIG. 4 A is related to the program identification data of the program data acquired when the preselection data Drv is generated.

In this connection, the preselection registration identification data (#1) and the preselection registration identification data (#3) in FIG. 4 A correspond to the program identification data (#1) and the program identification data (#3) shown in FIG. 3 and the preselection data Drv and the program data are managed based on the correspondence, thereby making it possible to speed up the retrieval process at step S104.

Next, at step S112, the system controller 9 determines whether or not the current time reaches the recording start time set by the preselection data Drv based on the time counting result of the time base 10. If the recording start time is reached, the system controller 9 goes to step S114 and sets station selection in the demultiplexing section 2 based on the channel data contained in the preselection data Drv, starts recording, and repeats the process starting at step S100.

If the current time is not the recording start time at step S112, the system controller 9 goes to step S116 and determines whether or not the current time is the recording end time set by the preselection data Drv. That is, after recording is started at step S114, whether or not the recording end time set in the program being recorded is reached is determined at step S116. If the recording end time is not yet reached, the system controller 9 repeats the process starting at step S100. If the system controller 9 determines that the recording end time set in the program being recorded is reached, the system controller 9 goes to step S118 and terminates the recording and then repeats the process starting at step S100.

Further, at step S118, the system controller 9 extracts the program data corresponding to the program which has been recorded from the electronic program guide file shown in FIG. 3 and additionally records the program data in the video audio data Dav' of the program which has been recorded as contents data. Accordingly, if the user, etc., operates a predetermined operation key of the operation section 16 to give an instruction for playing back the contents data, similar display to the electronic program guide can be produced on the display and the display sections 12 and 15 for use as retrieving the already recorded programs, etc.

If the user, etc., operates a predetermined operation key called "playback key" of the operation section 16, the system controller 9 supplies the video audio data Dav' of the program already recorded in the recording area 6 to the video signal generation section 3 for performing video playback and audio playback on the display and the loudspeaker connected to the video signal generation section 3.

As described above, according to the recorder of the embodiment, if the distribution schedule of the program whose recording is preselected by the user, etc., is changed, the preselection data Drv' is corrected and updated based on the most recent electronic program guide data Depg' and the preselected program is recorded based on the updated preselection data Drv' and thus the program desired by the user, etc., can be recorded appropriately.

When the user, etc., preselects "every-time recording" of a program scheduled to be periodically distributed, if the distribution schedule of the program is changed, the preselection data Drv' is corrected and updated based on the most recent electronic program guide data Depg' and the preselected program is recorded based on the updated preselection data Drv' and thus the program desired by the user, etc., can be recorded appropriately.

Further, the preselection data Drv' is corrected and updated automatically, so that excellent convenience can be provided for the user, etc.

The recorder of the embodiment acquires electronic program guide data distributed through the broadcast network and uses the acquired electronic program guide data for the user, etc., to preselect recording of a program. However, the invention is not limited to the mode of acquiring the electronic program guide data through the broadcast network. As a specific example, a communication circuit connected to a communication network such as the Internet may be provided and electronic program guide data distributed from a predetermined site connected to the communication network may be stored in the electronic program guide data storage area 7 to preselect recording of a program.

The recorder of the embodiment is intended for the user, etc., to preselect recording of a program distributed by a digital multichannel television broadcast as content. However, the invention is not limited to the mode of preselecting recording of a program as content distributed by such a digital multichannel television broadcast.

Specifically, a communication circuit connected to a communication network of the Internet, a CATV, etc., can be provided and the user, etc., can preselect the distribution schedule date and time of content distributed through the Internet, the CATV, etc. A reception tuner for receiving radio broadcasts can be provided and the user, etc., can preselect the distribution schedule date and time of content distributed by the radio broadcast.

The recorder of the embodiment stores the electronic program guide data Depg' and the preselection data Drv' in a storage medium such as a DVD or a hard disk for recording and playing back information using mechanical drive means, but may be configured so as to store the data in storage means for enabling information to be stored andplayedbackwithout using mechanical drive means, such as semiconductor memory and the like.

The recorder of the embodiment is a recorder comprising the portion of the preselection function in one piece. However, the portion of the preselection function, namely, the portion of the recorder from which the recording area 6 for recording the video audio data Dav and the video signal generation section 3 are excluded may be configured as a separate preselection apparatus and a separate recorder may be connected to the preselection apparatus for performing preselection control for the recorder.

If a separate preselection apparatus is thus provided, the user, etc., can preselect not only recording of broadcast programs described above, but also any other than recording, so that the preselection apparatus can be widely applied to general electronic machines.

The recorder of the embodiment shown in FIG. 1 comprises the demultiplexing section 2 and the electronic program guide data generation section 4 implemented as hardware. However, the demultiplexing section 2 and the electronic program guide data generation section 4 may be provided by a computer program for exerting equivalent functions to those of the demultiplexing section 2 and the electronic program guide data generation section 4 and the computer program may be executed by the microprocessor of the system controller 9. That is, in the recorder shown in FIG. 1, the configuration of the portion for performing the preselection processing described above may be implemented not only as hardware, but also as software.

The preselection program is thus provided by the computer program, whereby the preselection program is downloaded into an electronic machine comprising a microprocessor through a communication network such as the Internet or a storage medium such as a CD or a DVD recording the preselection program is distributed to the user, etc., for installing the preselection program in an electronic machine comprising a microprocessor, whereby the electronic machine can be provided with the content preselection function.

As described above, according to the invention, preselection of content is registered using the distribution schedule time information contained in the schedule information provided from the information providing source as preselection information and during the preselection management after preselection of the content is registered, if schedule information provides change of the information indicating the distribution schedule time of the preselected content, the preselection information is updated based on the schedule information meaning that the distribution schedule time is changed, and the preselection management is performed based on the updated preselection information. Thus, if the distribution schedule time of the preselected content is changed, preselection management of the content is performed appropriately.

Thus, if the distribution schedule time of the content preselected by the user, etc., is changed, appropriate preselection management can be conducted without making the user, etc., aware of change of the distribution schedule time, and the convenience of the user, etc., can be improved.

Since preselection management is conducted using the information of an electronic program guide distributed through the broadcast network or the communication network as the schedule information, appropriate preselection management of broadcast programs can be conducted and the preselected broadcast programs can be recorded appropriately.

## Claims

1. A preselection apparatus comprising:
a reception section which receives schedule information provided from an information providing source, the schedule information containing time information indicating a distribution schedule time of a content;
a storage section which stores the time information, received at the reception section, thereby registering preselection of the content; and
a control section which performs preselection management with the time information stored in the storage section as preselection information,
wherein,
when the reception section receives schedule information indicating that the distribution schedule time is changed, the control section updates the preselection information stored in the storage section based on the received information indicating the changed distribution schedule time and performs the preselection management based on the updated preselection information.

2. The preselection apparatus as claimed in claim 1 wherein the preselection information is information of an electronic program guide distributed through a broadcast network or a communication network.

3. A preselection method comprising the steps of:
acquiring schedule information provided from an information providing source, the schedule information containing time information indicating a distribution schedule time of content;
storing the time information contained in the acquired schedule information, thereby registering preselection of the content; and
performing preselection management with the distribution schedule time information as preselection information and when schedule information indicating a change of the distribution schedule time is provided from the informationproviding source, updating the preselection information under the preselection management based on the provided information indicating the changed distribution schedule time and performing the preselection management based on the updated preselection information.

4. The preselection method as claimed in claim 3 wherein the preselection information is information of an electronic program guide distributed through a broadcast network or a communication network.

5. A preselection program comprising:
reception means for acquiring schedule information provided from an information providing source, the schedule information containing information indicating a distribution schedule time of content;
preselection registration means for storing the time information contained in the acquired schedule information, thereby registering preselection of the content; and
preselection management means for performing preselection management with the distribution schedule time information as preselection information,
wherein,
when schedule information indicating a change of the distribution schedule time is provided from the information providing source,
the preselection management means updates the preselection information under the preselection management based on the provided information indicating the changed distribution schedule time, and performs the preselection management based on the updated preselection information.

6. The preselection program as claimed in claim 5 wherein the preselection information is information of an electronic program guide distributed through a broadcast network or a communication network.

7. A recorder comprising:
a record section which records the content, ; a reception section which receives schedule information provided from an information providing source, the schedule information containing time information indicating a distribution schedule time of content;
a storage section which stores the time information received at the reception section, thereby registering preselection of the content; and
a control section which performs preselection management with the distribution schedule time information stored in the storage section as preselection information,
wherein,
when the reception section receives schedule information indicating that the distribution schedule time is changed, the control section updates the preselection information stored in the storage section based on the received information indicating the changed distribution schedule time, thereby performing the preselection management based on the updated preselection information, and recording the content in the record section.

8. The recorder as claimed in claim 7 wherein the preselection information is information of an electronic program guide distributed through a broadcast network or a communication network.

9. A recorder comprising a preselection function, the preselection function comprising:
a reception function for acquiring schedule information provided from an information providing source, the schedule information for containing time information indicating a distribution schedule time of content;
a preselection registration function for storing the time information contained in the acquired schedule information, thereby registering preselection of the content; and
a preselection management function for performing preselection management with the distribution schedule time information as preselection information,
wherein,
when schedule information indicating a change of the distribution schedule time is provided from the information providing source,
the preselection information is updated by the preselection management function under the preselection management based on the provided information indicating the changed distribution schedule time
and the preselection management is performed by the preselection management function based on the updated preselection information.

10. A recorder as claimed in claim 9 wherein the the preselection function is acquired by a download through a communication network.

11. A recorder as claimed in claim 9 wherein the the preselection function is acquired by an installation from a storage medium.

12. A recording medium for recording a program, the program comprising:
reception means for acquiring schedule information provided from an information providing source, the schedule information containing time information indicating a distribution schedule time of content;
preselection registration means for storing the information indicating the distribution schedule time of content, contained in the acquired schedule information, thereby registering preselection of the content; and
preselection management means for performing preselection management with the distribution schedule time information as preselection information,
wherein,
when schedule information indicating a change of the distribution schedule time is provided from the information providing source, the preselection management means updates the preselection information under the preselection management based on the provided information indicateing the changed distribution schedule time and performs the preselection management based on the updated preselection information.

13. A preselection apparatus comprising:
a receiver for receiving schedule information containing time information indicating a distribution schedule time of a content;
a storage for storing the time information; and
a controller for performing preselection management based on the time information,
wherein
the controller updates the time information in the storage upon the reception of the updated schedule information.

14. A preselection method comprising steps of:
receiving schedule information containing time information indicating a distribution schedule time of a content;
storing the time information;
performing preselection management based on the time information;
and updating the time information in the storage upon the reception of the updated schedule information.
